# EUROPEAN PATENT APPLICATION

(11) **EP 4 722 961 A1**
(43) Date of publication of application: **08.04.2026**
(21) Application number: 25202685.1
(22) Date of filing: 17.09.2025
(51) Int. Cl.: G06F 21/55, G06F 8/61, G06F 8/75, G06F 21/56, G06F 21/57, G06N 3/08, G06N 20/00, H04L 9/40

(54) **INFORMATION CLASSIFICATION BASED ON DETECTING PROVISIONS FOR INTRUSIVE ACTIONS**

(30) Priority: 03.10.2024 US 202418906067
(71) Applicant: CrowdStrike, Inc., Sunnyvale, CA 94086 (US)
(72) Inventor: Sabens, Shannon, Sunnyvale, 94086 (US); Radu, Marian, Sunnyvale, 94086 (US); Kaplan, Jeffrey, Sunnyvale, 94086 (US)
(74) Representative: Murgitroyd & Company

(57) **Abstract**

The present disclosure provides an approach of obtaining information associated with a software program. The present disclosure produces, by a processing device, a classification using an AI model that identifies, in the information, a provision indicating that the software program will perform an intrusive action. In turn, the present disclosure provides the classification to a destination device that indicates the information comprises the provision.

## Description

### TECHNICAL FIELD

Aspects of the present disclosure relate to cybersecurity, and more particularly, to information classification using an artificial intelligence (AI) model that detects provisions for intrusive actions.

### BACKGROUND

Information, such as software usage agreements, outline the rights and responsibilities of both a user and a software provider (e.g., software application provider, web content provider, etc.). These usage agreements, such as End-User License Agreements (EULAs), Terms of Service (ToS) agreements, Terms of Use agreements, Website Terms and Conditions, and other related usage agreements, may be presented during an installation process, on the software provider's website, or a combination thereof. Online resources often include detailed descriptions of the software's functionality, privacy policies, data collection practices, and user guidelines. These documents typically include provisions (e.g., clauses) that govern the installation, use, and distribution of the software, as well as limitations or restrictions.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1A is a block diagram that illustrates an example system for classifying information corresponding to a software program installation, in accordance with some embodiments of the present disclosure.
FIG. 1B is a block diagram that illustrates an example system for classifying information corresponding to web-based program, in accordance with some embodiments of the present disclosure.
FIG. 2 is a diagram that illustrates an example information that includes intrusive action provisions, in accordance with some embodiments of the present disclosure.
FIG. 3A is a diagram that illustrates an example of a prompt generated by prompt generator 115, in accordance with some embodiments of the present disclosure.
FIG. 3B is a diagram that illustrates an example of a classification, in accordance with some embodiments of the present disclosure.
FIG. 4 is a flow diagram of a method 400 for producing a classification based on provisions, in accordance with some embodiments.
FIG. 5 is a block diagram that illustrates an example system for classification based on provisions, in accordance with some embodiments of the present disclosure.
FIG. 6 is a block diagram of an example computing device that may perform one or more of the operations described herein, in accordance with some embodiments of the present disclosure.

### DETAILED DESCRIPTION

As discussed above, information, such as usage agreements, include provisions that govern the installation, use, and distribution of the software, as well as limitations or restrictions. Potentially Unwanted Programs (PUPs) are software programs that exhibit intrusive actions that users find undesirable, such as displaying advertisements, collecting personal data, mining cryptocurrency, altering system settings, or a combination thereof. At times, PUPs may provide information that include provisions. Provisions grant permission to the software program to perform intrusive actions. The intrusive actions, while authorized by the corresponding information (usage agreement), disrupt the user experience or invades user privacy by, for example, displaying advertisements, collecting personal data, mining cryptocurrency, altering system settings, or a combination thereof. As described herein, usage agreements may be referred to as "information," and intrusive use provisions may be referred to as "provisions," "intrusive use provisions," intrusive action provisions," or a combination thereof.

PUPs may be distributed through similar methods as adware, such as bundling with other "primary" software programs. The provisions in the primary software program's information authorizes the software developer to load the PUPs. As such, the information plays a role in legitimizing the installation of the Potentially Unwanted Programs (PUPs) by embedding consent within lengthy and complex legal documents that most users do not thoroughly read. These agreements, typically presented during the installation process of a primary software program, frequently include provisions that authorize the bundling of additional software. By accepting the information, users inadvertently grant permission for the installation of PUPs. The language in the information is typically crafted to be legally binding while remaining sufficiently vague or buried within dense text, making it easy for users to overlook the specifics of what they are consenting to. In short, software developers leverage the information (usage agreements) to distribute PUPs under the guise of legality, shifting the responsibility onto users who unknowingly agree to the terms, thereby circumventing potential legal repercussions and regulatory scrutiny.

A challenge found is that the information may be extensive and the manual review process is labor-intensive and introduces the possibility of human bias, which may impact the consistency and reliability of detecting the intrusive action provisions.

Artificial intelligence (AI) is a field of computer science that encompasses the development of systems capable of performing tasks that typically require human intelligence. Machine learning is a branch of artificial intelligence focused on developing algorithms and models that allow computers to learn from data and make predictions or decisions without being explicitly programmed. Machine learning models are the foundational building blocks of machine learning, representing the mathematical and computational frameworks used to extract patterns and insights from data. Large language models, a specialized category within machine learning models, are trained on vast amounts of text data to capture the nuances of language and context. By combining advanced machine learning techniques with enormous datasets, large language models harness data-driven approaches to achieve highly sophisticated language understanding and generation capabilities. As discussed herein, artificial intelligence models, or AI models, include machine learning models, large language models, and other types of models that are based on neural networks, genetic algorithms, expert systems, Bayesian networks, reinforcement learning, decision trees, or combination thereof.

The present disclosure addresses the above-noted and other deficiencies by using a processing device to obtain information associated with a software program. The processing device produces a classification using an AI model that identifies, in the information, a provision indicating that the software program will perform an intrusive action. As discussed herein, the AI model may be trained, fine-tuned, prompted, or a combination thereof to identify, in the information, a provision indicating that the software program will perform an intrusive action. In turn, the processing device provides the classification to a destination device that indicates the information includes the provision. The intrusive action may be at least one of, for example, displaying an advertisement, collecting user data, mining cryptocurrency, misusing or overusing computing resources, or modifying system settings. In some embodiments, the processing device also sends a recommendation to the destination device to decline acceptance of the information based upon the provision being included in the information. In one embodiment, the processing device restricts execution of the software program on the destination device based on the provision indicating that the software program will perform an intrusive action.

In some embodiments, the provision grants legal permission to the software program to perform the intrusive action at the destination device. In some embodiments, the provision grants legal permission to a third party application to perform the intrusive action at the destination device.

In some embodiments, the processing device labels the information based on the intrusive action to produce labeled information (labeled usage agreement). In turn, the processing device fine-tunes the AI model using the labeled information. In some embodiments, the processing device forms a prompt with a rule that directs the AI model to analyze a sub-section of the information for the provision. The AI model is trained to capture long range dependencies of text in the sub-section of the information. The processing device then provides the prompt to the AI model.

In some embodiments, the information is at least one of an End User License Agreement (EULA), a Terms of Service (ToS) agreement, a Terms of Use (ToU) agreement, or a Website Terms and Conditions agreement. In some embodiments, the software program is at least one of a software application to install on the destination device or a web-based program accessed by the destination device.

As discussed herein, the present disclosure provides an approach that improves the operation of a computer system by using an AI model to identify provisions in information, thereby enhancing the system's ability to automatically detect and flag potentially disruptive or privacy-invading terms, ensuring greater transparency and user awareness. In addition, the present disclosure provides an improvement to the technological field of legal document analysis by using an AI model to automatically identify provisions in the information, thereby increasing the accuracy and efficiency of detecting potentially disruptive or privacy-invading terms.

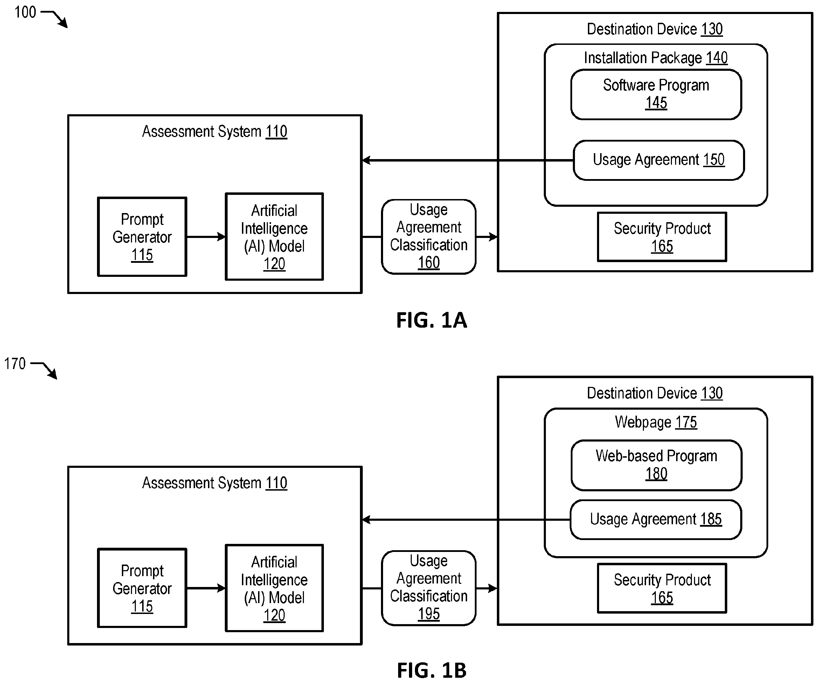

FIG. 1A is a block diagram that illustrates an example system for classifying information corresponding to a software program installation, in accordance with some embodiments of the present disclosure.

Diagram 100 shows that destination device 130 includes installation package 140, which installs software program 145 on destination device 130. Installation package 140 also includes information 150, such as an end user license agreement (EULA), to which a user of destination device 130 agrees before software program 145 is installed on destination device 130. Information 150 may include provisions that grant software program 145 permission to perform intrusive actions. For example, information 150 may include a provision that permits software program 145 to display advertisements on destination device 130, collect user data on destination device 130, mine cryptocurrency on destination device 130, adjust system settings on destination device 130, or perform other intrusive actions on destination device 130.

Assessment system 110 includes prompt generator 115 and artificial intelligence (AI) model 120. AI model 120 identifies whether the information 150 includes an provision indicating that software program 145 performs a intrusive action. In one embodiment, AI model 120 has been trained on a large corpus of text which endows AI model 120 with the long range dependencies between words, phrases, and concepts common in the corpus. Long range dependencies of text refer to the relationships and connections between words, phrases, or sentences that are far apart in a document, essential for understanding context, maintaining coherence, and capturing meaning over extended passages. For example, AI model 120 is trained on many lengthy examples that include "mining crypto," "running a process in the background," etc.

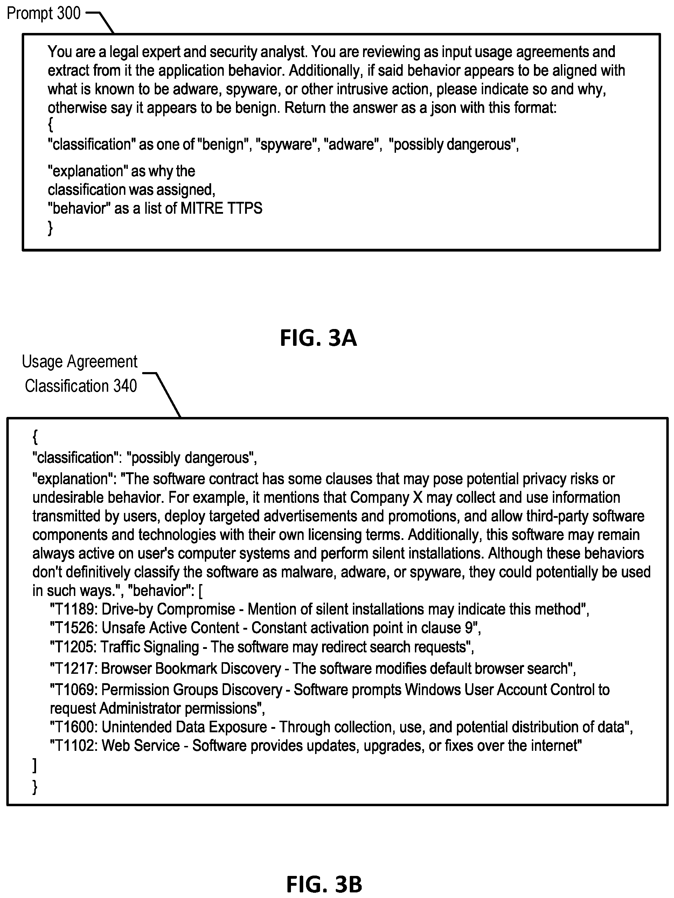

Assessment system 110 receives information 150 from destination device 130 and generates a prompt via prompt generator 115 to instruct AI model 120 to evaluate information 150. Referring to Fig. 3A, the prompt 300 may instruct AI model 120 to review the information 150 and extract the intended application behavior. If the behavior appears to be adware, spyware, or other intrusive actions, AI model 120 is to return as classification accordingly as well as an explanation as to why the classification is assigned.

Assessment system 110 analyzes information 150 and produces classification 160 (e.g., usage agreement classification). Classification 160 may include a classification as well as an explanation as to the reasoning of the classification. Referring to FIG. 3B, classification 340 may include a classification of "possibly dangerous" and an explanation as to the reasoning of the classification. In addition, classification 340 may reference particular sections of information 150 that indicate intrusive actions for further investigation. As described herein, a classification may be referred to as a "classification."

Assessment system 110 provides classification 160 to destination device 130. In one embodiment, destination device 130 includes security product 165, which evaluates classification 160 and determines whether to proceed with installing software program 145. In one embodiment, classification 160 may include a recommendation to a user of destination device 130 to decline installation of software program 145 based on the classification.

In one embodiment, assessment system 110 labels information 150 according to classification 160 and uses the labeled information to further fine-tune AI model 120. In one embodiment, assessment system 110 evaluates information 150 for parental controls, such as determining an age range indicated in information 150 for software program 145 (e.g., "Intended for persons 16 and older"). In this embodiment, security product 165 may be configured to decline installation when the classification 160 does not adhere to parental control settings of destination device 130.

FIG. 1B is a block diagram that illustrates an example system for classifying information corresponding to web-based program, in accordance with some embodiments of the present disclosure.

Diagram 170 is similar to diagram 100 in FIG. 1A, with the exception that destination device 130 displays webpage 175 that includes web-based program 180 and information 185. Web-based program 180, for example, is a software application or utility that is accessed and executed through a web browser over a computer network. Information 185 includes provisions corresponding to web-based program 180, such as "By accessing and using this website, you acknowledge and agree to the following: a) The website may display advertisements, including targeted advertisements based on your browsing history and personal preferences; b) The website may collect and use personal data, including but not limited to your IP address, browsing history, and interaction with website features, for the purposes of improving user experience, personalizing content, and providing targeted advertisements; c) The website may integrate with third-party services that collect and use your data for various purposes, including analytics, advertising, and social media integration; and d) Any content you submit to the website, including comments, reviews, and feedback, may be used by the website for promotional purposes, including displaying your content in advertisements and marketing materials."

Similar to that discussed above, assessment system 110 evaluates information 185, produces classification 195 (e.g., usage agreement classification), and provides classification 195 to destination device 130 accordingly.

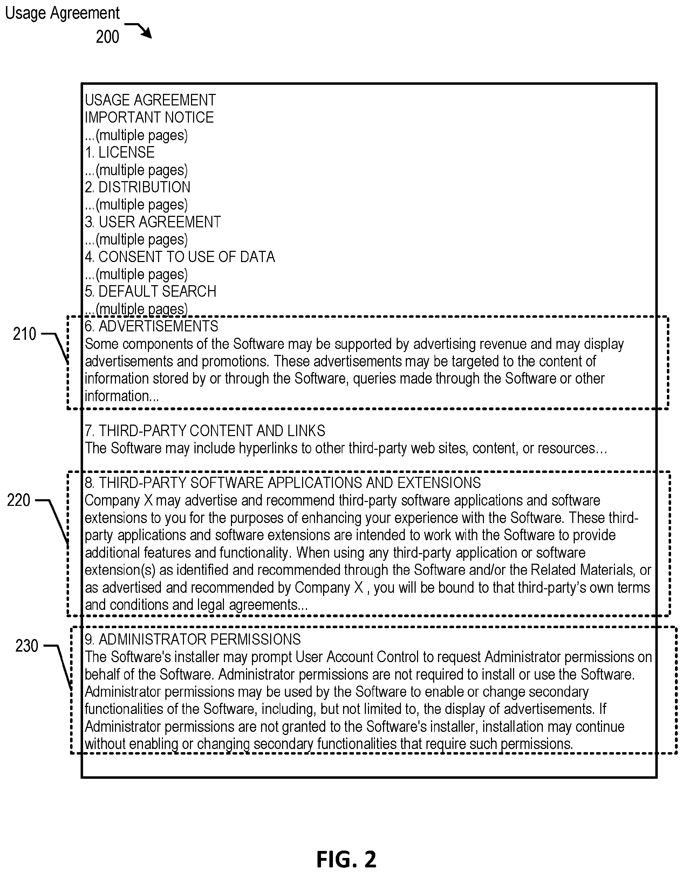

FIG. 2 is a diagram that illustrates an example information that includes provisions (e.g., intrusive use clauses), in accordance with some embodiments of the present disclosure. Information 200 corresponds to a software program that, when accepted by a user, grants legal permission for the software program to perform actions according to information 200.

Information 200 may be lengthy with hundreds of provisions throughout the agreement. FIG. 2 shows three intrusive uses provisions 210, 220, and 230. Provision 210 grants legal permission to the software program to display advertisements and promotions on the destination device. Provision 220 grants legal permission to the software program to advertise and recommend third-party software applications and software extensions and bounds the user to the third-party's own terms and conditions. Provision 230 grants legal permission to the software program to use administrator permissions to enable or change secondary functionalities of the software, including but not limited to displaying advertisements.

FIG. 3A is a diagram that illustrates an example of a prompt generated by prompt generator 115, in accordance with some embodiments of the present disclosure. Prompt 300 instructs AI model 120 to evaluate information 150 to assess the anticipated behavior of software program 145. If the behavior appears to aligned with adware, spyware, or potentially unwanted program, return a classification and an explanation the reasoning of the classification. In one embodiment, prompt generator 115 may include rules such as "if it may mine crypto in the background then it can perform an intrusive action" as a part of prompt 300 to instruct AI model 120 to pay attention to key intentions of the software.

FIG. 3B is a diagram that illustrates an example of classification 340 that is produced using AI model 120, in accordance with some embodiments of the present disclosure. Classification 340 includes a classification of "possibly dangerous" and includes an explanation of the classification and identifies particular locations in information 150 that the classification is based upon.

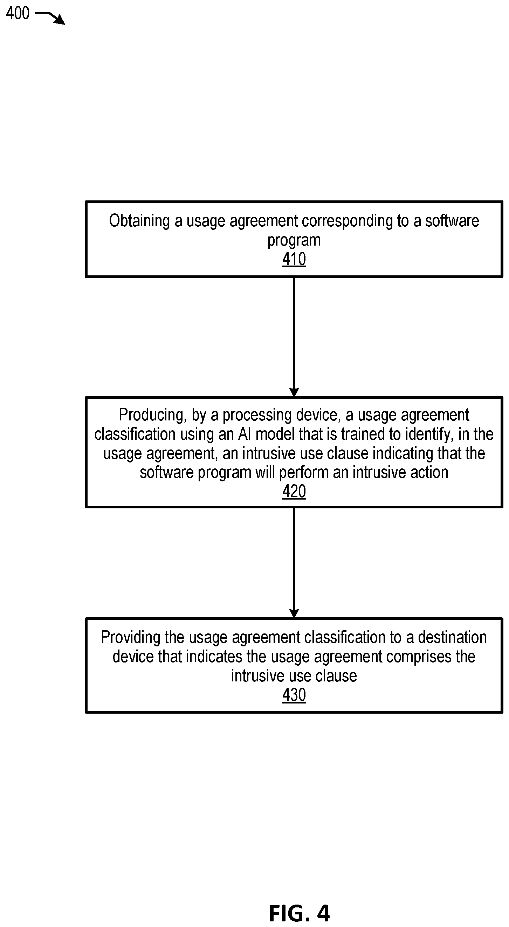

FIG. 4 is a flow diagram of a method 400 for producing a classification based on provisions, in accordance with some embodiments.

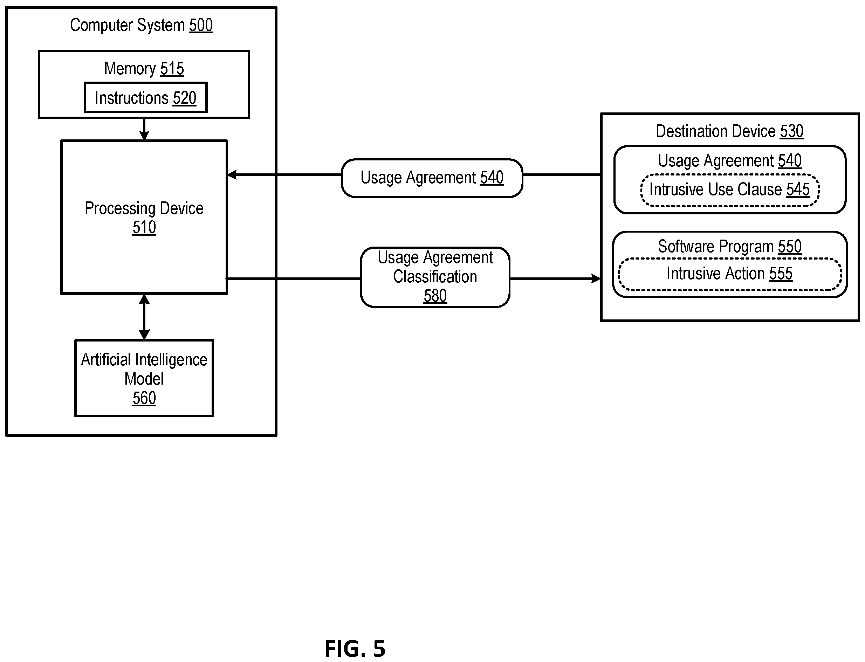

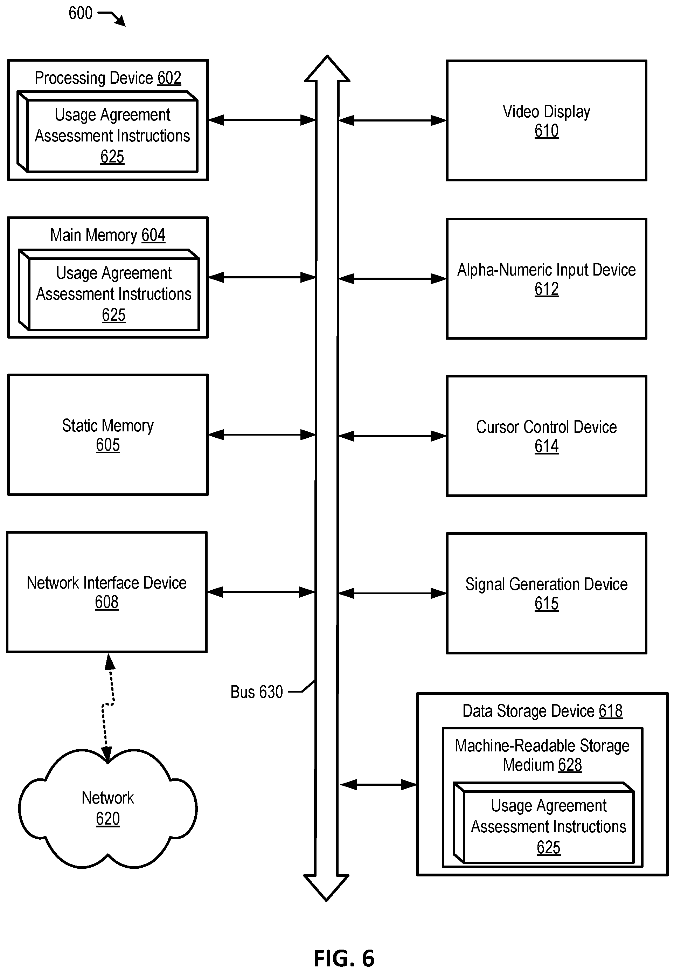

Method 400 may be performed by processing logic that may include hardware (e.g., a processing device), software (e.g., instructions running/executing on a processing device), firmware (e.g., microcode), or a combination thereof. In some embodiments, at least a portion of method 400 may be performed by AI model 190 (shown in FIG. 1), processing device 510 (shown in FIG. 5), processing device 602 (shown in FIG. 6), or a combination thereof.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

With reference to FIG. 4, method 400 begins at block, whereupon processing logic obtains information corresponding to a software program. In one embodiment, the software program is a software application to install on a destination device or a web-based program accessed by the destination device. In one embodiment, the information is an End User License Agreement (EULA), a Terms of Service (ToS) agreement, a Terms of Use (ToU) agreement, or a Website Terms and Conditions agreement.

At block 420, processing logic produces a classification using an AI model that identifies, in the information, a provision indicating that the software program will perform an intrusive action. In one embodiment, the provision grants permission to the software program to perform the intrusive action at a destination device. In one embodiment, the provision grants permission to a third party application to perform the intrusive action at the destination device. In one embodiment, the intrusive action is at least one of displaying an advertisement, collecting user data, mining cryptocurrency, or modifying system settings.

At block 430, processing logic provides the classification to a destination device that indicates the information comprises the provision. In some embodiments, the processing device may restrict (e.g., block or limit) execution of the associated software program 145, for example, by sending an instruction or recommendation to the destination device to decline acceptance of the information, based upon the provision being in the information. In turn, the destination device may then execute the instruction or recommendation, such as by failing installation or deleting the installation package 140. In some embodiments, the processing device produces a labeled information by labeling the information based on the intrusive action, and subsequently fine-tunes the AI model using the labeled information.

FIG. 5 is a block diagram that illustrates an example system for information classification based on provisions, in accordance with some embodiments of the present disclosure.

Computer system 500 includes processing device 510 and memory 515. Memory 515 stores instructions 520 that are executed by processing device 510. Instructions 520, when executed by processing device 510, cause processing device 510 to obtain information 540 corresponding to software program 550. Processing device 510 produces a classification 580 using AI model 560 that identifies, in the information 540, a provision 545 indicating that the software program 550 will perform an intrusive action 555. In turn, processing device 510 provides the classification 580 to destination device 530.

FIG. 6 illustrates a diagrammatic representation of a machine in the example form of a computer system 600 within which a set of instructions, for causing the machine to perform any one or more of the methodologies discussed herein for producing a classification.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computer system 600 may further include a network interface device 608 which may communicate with a network 620. Computer system 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In some embodiments, video display unit 610, alphanumeric input device 612, and cursor control device 614 may be combined into a single component or device (*e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute information classification instructions 625, for performing the operations and steps discussed herein.

The data storage device 618 may include a machine-readable storage medium 628, on which is stored one or more sets of information classification instructions 625 (e.g., software) embodying any one or more of the methodologies of functions described herein. The information classification instructions 625 may also reside, completely or at least partially, within the main memory 604 or within the processing device 602 during execution thereof by the computer system 600; the main memory 604 and the processing device 602 also constituting machine-readable storage media. The information classification instructions 625 may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as obtaining, producing, providing, sending, forming, labeling, fine-tuning, or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
obtaining information associated with a software program;
producing, by a processing device, a classification using an AI model that identifies, in the information, a provision indicating that the software program will perform an intrusive action; and
providing the classification to a destination device that indicates the information corresponding to the software program comprises the provision.

2. The method of claim 1, further comprising:
restricting execution of the software program on the destination device based on the provision indicating that the software program will perform an intrusive action.

3. The method of claim 1 or 2, wherein the intrusive action is at least one of displaying an advertisement, collecting user data, mining cryptocurrency, or modifying system settings.

4. The method of any preceding claim, further comprising:
sending a recommendation to the destination device to decline acceptance of the information based upon the information comprising the provision.

5. The method of any preceding claim, further comprising:
forming a prompt comprising a rule that directs the AI model to analyze a sub-section of the information for the provision, wherein the AI model is trained to capture long range dependencies of text in the sub-section of the information; and
providing the prompt to the AI model.

6. The method of any preceding claim, wherein the provision grants legal permission to the software program to perform the intrusive action at the destination device.

7. The method of any preceding claim, wherein the provision grants legal permission to a third party application to perform the intrusive action at the destination device.

8. The method of any preceding claim, further comprising:
labeling the information based on the intrusive action to produce labeled information; and
fine-tuning the AI model using the labeled information.

9. The method of any preceding claim, wherein the information is at least one of an End User License Agreement, EULA, a Terms of Service, ToS, agreement, a Terms of Use, ToU, agreement, or a Website Terms and Conditions agreement.

10. The method of any preceding claim, wherein the software program is at least one of a software application to install on the destination device or a web-based program accessed by the destination device.

11. A system comprising:
a memory; and
a processing device, that is operatively coupled to the memory, to carry out the method of any preceding claim.

12. A computer program that, when executed by a processing device, is configured to cause the processing device to carry out the method of any one of claims 1 to 10.
